# EUROPEAN PATENT APPLICATION

(11) **EP 4 446 867 A1**
(43) Date of publication of application: **16.10.2024**
(21) Application number: 23167731.1
(22) Date of filing: 13.04.2023
(51) Int. Cl.: G06F 3/16

(54) **A CONTROL SYSTEM AND METHOD FOR CONTROLLING EQUIPMENT**

(71) Applicant: Koninklijke Philips N.V., 5656 AG Eindhoven (NL)
(72) Inventor: AMTHOR, Thomas Erik, Eindhoven (NL); GRAESSLIN, Ingmar, Eindhoven (NL); NIELSEN, Tim, 5656AG Eindhoven (NL)
(74) Representative: Philips Intellectual Property & Standards

(57) **Abstract**

A control system is used to control equipment, the equipment being configured to receive user input control commands from one or more human interface devices. The control system receives captured user input control commands and then identifies control actions to be applied to the equipment in order to put into effect the user input control commands. The control actions are converted to human interface device, HID, input commands compatible with said one or more human interface devices, suitable for controlling the equipment. The HID input commands are then transmitted to the equipment to emulate user input applied to said one or more human interface devices. In this way the control system can be applied to different types of equipment, by converting the input control commands (e.g. spoken commands or gesture commands) into the suitable HID input commands (that would normally be manually input by the user) for the particular equipment.

## Description

### FIELD OF THE INVENTION

This invention relates to the control of equipment, and in particular equipment which is distributed between multiple locations. One particular example is medical systems wherein part of the equipment interacts with the patient and another part relates to control of the medical system but may be remote from the patient. Medical imaging is one particular example.

### BACKGROUND OF THE INVENTION

Medical imaging is typically performed in an exam room (for instance, a Magnetic Resonance Imaging (MRI) or a Computed Tomography (CT) room), where the patient and the imaging system are located. However, a control console for the imaging system is typically located in a separate control room. Thus, the control of the imaging procedure takes place remotely from the patient.

There is an increasing need for improved efficiency in the radiology workflow, which often contradicts the operational staffs intention to spend as much time as possible with the patient. Furthermore, a general lack of radiology staff means that fewer people are available to operate the imaging systems, which means that more actions must be done sequentially that could have been done in parallel.

However, many functions of the medical imaging system can only be controlled at the console, in the control room. A local operator must leave the exam room and the patient to perform these actions. Systems are being investigated which enable local staff to be supported by remote experts or control the equipment remotely. The remote expert, if expected to oversee many different imaging system types from different vendors, needs to know how to perform a required action in many different and inconsistent user interfaces. The workload on the remote operating staff can, therefore, still be high, in particular when multiple very different systems need to be controlled simultaneously. This approach also leads to task-switching overhead and takes additional time.

US2010131280A1 describes a system for transmitting voice commands configured for recognizing user authorization (i.e., a decryption system).

There is therefore a need for a simplified approach for the control of equipment such as medical systems.

### SUMMARY OF THE INVENTION

The invention is defined by the independent claims. Dependent claims represent beneficial embodiments.

According to examples in accordance with an aspect of the invention, there is provided a control system for controlling equipment, the equipment being configured to receive user input control commands from one or more human interface devices, wherein the control system comprises a processor for receiving and processing user input control commands, wherein the processor is adapted to:
identify control actions to be applied to the equipment in order to put into effect the user input control commands;
convert the control actions to human interface device, HID, input commands compatible with said one or more human interface devices, suitable for controlling the equipment; and
transmit the HID input commands to the equipment to emulate user input applied to said one or more human interface devices.

This control system enables an operator of equipment to use input control commands which are independent of the HID commands (such as user input control commands in the form of voice or gesture commands). These control commands are interpreted by the control system and then converted to suitable HID commands for the equipment i.e. compatible with the human interface devices of the equipment. Thus, the user does not use the HIDs, but the control system generates HID signals as if the user had used the HIDs. This is what is meant by "emulate user input". The control system thus functions as an intermediary between the user (who may use voice commands for example) and the human interface devices of the equipment being controlled.

The equipment for example is distributed with different parts in different places, for example the human interface devices may be at one location (in a control room) whereas a main functional part of the equipment may be at another location (at a patient for a medical system, or at a workpiece for a non-medical system). The control system enables the user to be located remote from the human interface devices, but still provide commands to the equipment which emulate the use of those human interface devices.

One particular example is medical system, with a patient part and a control. For the example of a medical scanner, the operator of the control system is for example located with the patient, in the exam room, whereas the one or more HIDs of the medical system are located at the console, which is typically in a different control room. An HID is typically a USB input device, such as a keyboard or mouse, compatible with the USB HID protocol. Thus, the medical scanner typically comprises a USB port which communicates with a HID host of the medical scanner. The local operator can thereby operate the imaging system console even from within the exam room or from any other place. The invention is for example of interest for CT imaging.

The processor is for example adapted to extract spoken commands from the user input control commands using voice recognition or extract gestured commands from the user input control commands using gesture recognition.

The use of voice commands enables the local operator to have both hands free while operating the system. In a preferred embodiment, the medical system is a medical imaging system, such as a Computed Tomography (CT), Magnetic Resonance Imaging (MRI), Positron Emission Tomography (PET), Angiography system and other imaging systems.

Generally, the current invention can be applied in any type of distributed equipment, such as medical system, or medical or non-medical imaging systems, or other non-medical examples such as freight control equipment.

The conversion of the control actions to HID input commands enables the operator to easily control an imaging system in a consistent way independent of the specific system type and user interface. In particular, the commands provided by the user (which can be independent of the HID commands, for example voice or gesture commands) are converted to user interface commands which are suitable for the particular medical system, hence specific to the modality type and vendor. The control system is thereby vendor-agnostic and can be retrofitted to any existing imaging system installation.

In a remote assistance scenario, as mentioned above, a remote expert may not be perfectly familiar with all the different user interfaces of different vendors' equipment (such as medical scanners). In this situation, the automated system operating the user interface by means of emulated keyboard or mouse (or other HID) signals can be beneficial. The remote expert could then use consistent commands (e.g., voice commands) to let the system execute similar tasks on different user interfaces.

When the control system enables the use of voice commands, sounds are first captured by a microphone, which may be a dedicated microphone e.g. in the exam room of a medical scanner, or an existing intercom solution, or a headset worn by the operator. The captured sounds are then subjected to voice recognition to interpret the sounds and identify keywords and semantic structure. The processor is for example configured to transmit the HID input commands over a USB cable.

The sound collection and processing are for example performed locally in the exam room, and results in the control of console in a control room via HID commands.

The result is that the control system generates HID commands as if they originated from a local user interface, such as a local keyboard or mouse. In this way, user actions are emulated by the control system.

The HID input commands for example comprise one or more of: mouse commands, trackpad commands, touchpad commands, keyboard commands, or gesture commands. Thus, the control system emulates the use of a keyboard or mouse or other HID device.

The equipment for example comprises a display screen, wherein the processor is further adapted to receive a displayed output of the display screen and determine, from the displayed output, the current status of the equipment, and wherein the HID input commands take into account the current status of the equipment.

The required HID input commands in order to implement a desired control action (such as keystrokes or icon selections on the display), will in some situations depend on the current status of the equipment. For example, in the case of a medical scanner, a viewing mode may need to be changed, or a modal dialog window may need to be closed before performing an action. In some cases, a UI element required for the action to be performed (such as a display icon that needs to be selected) may be located at variable positions on the screen depending on the current status of the medical scanner. By receiving the displayed output, the control system is able to identify the status of the equipment, for example to identify the presence of, and the displayed position of, a UI elements.

The processor may be configured to receive the displayed output of the display screen as a captured video signal or as data from screen grabbing software. The feedback of the equipment display may thus be achieved using hardware and/or software.

For the example of a medical scanner, the processor is for example configured to select the control actions from a pre-defined list of control actions, including one or more of:
changing patient details in a patient record;
moving a patient table and positioning the patient;
starting or stopping scan events;
performing calibration measurements;
changing lighting or fan settings.

The user of the control system thus has a set of control actions which may be applied to any medical scanner. The control system then converts those actions to suitable HID input commands. The user thereby does not need full knowledge of the different commands of the HID of the equipment.

The control system may further comprise a database which stores the HID information for a plurality of different types of equipment.

A single user can thereby control different types of equipment with reduced overhead in learning the different user interfaces for those system. The data for the equipment is fetched from this database to perform the mapping to HID input commands.

The processor is for example further configured to obtain user feedback before transmitting the corresponding HID input commands. This user feedback for example enables the user to provide approval for an identified control action before the control system transmits the corresponding HID input commands.

Obtaining approval for the proposed action may for example be achieved by voice communication using a loudspeaker and microphone, or by visual/haptic communication via a display, button, or touchscreen, or a gesture recognition device. The approval may be requested from the same operator who initially gave the voice command or from another local or remote operator with the required expertise.

The processor is for example further configured to perform masking for audio and video data de-identification.

The invention also provides a system, comprising:
equipment capable of receiving user input control commands from one or more human interface devices; and
the control system as defined above for controlling the equipment.

The invention also provides a method of controlling equipment, the equipment capable of receiving user input control commands from one or more human interface devices, wherein the method comprises:
identifying control actions to be applied to the equipment in order to put into effect the user input control commands;
converting the control actions to human interface device, HID, input commands compatible with said one or more human interface devices, suitable for controlling the equipment; and
transmitting the HID input commands to the equipment to emulate user input applied to said one or more human interface devices (14).

This method enables an operator to easily control equipment in a consistent way independent of the specific system type and user interface.

The equipment for example comprises a display screen, and the method further comprises receiving the displayed output of the display screen and determining, from the displayed output, the current status of the equipment, and wherein the generation of the HID input commands take into account the current status of the equipment.

The HID input commands for example comprise one or more of specific mouse commands, trackpad commands, touchpad commands, keyboard commands, or gesture commands.

The equipment for example comprises a medical scanner, and the method comprises selecting the control actions from a pre-defined list of control actions, including one or more of:
changing patient details in a patient record;
moving a patient table and positioning the patient;
starting or stopping scan events;
performing calibration measurements;
changing lighting or fan settings.

The method for example comprises accessing a database to convert the control actions to HID input commands, wherein the database stores user input control commands which are supported by a plurality of different types of equipment.

The invention also provides a computer program comprising computer program code which is adapted, when said program is run on a computer, to implement the method defined above.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows shows equipment in the form of a medical system, in particular a radiology system, including a control system for generating HID commands;
Fig. 2 shows the function of a first example of the control system;
Fig. 3 shows the function of a second example of the control system; and
Fig. 4 shows a method of controlling equipment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a control system which is used to control equipment, the equipment being configured to receive user input control commands from one or more human interface devices. The control system receives captured user input control commands and then identifies control actions to be applied to the equipment in order to put into effect the user input control commands. The control actions are converted to human interface device, HID, input commands compatible with said one or more human interface devices, suitable for controlling the equipment. The HID input commands are then transmitted to the equipment to emulate user input applied to said one or more human interface devices. In this way the control system can be applied to different types of equipment, by converting the input control commands (e.g. spoken commands or gesture commands) into the suitable HID input commands (that would normally be manually input by the user) for the particular equipment

As explained above, the invention may be applied to any equipment which uses human interface devices for inputting control commands. It allows the user to provide commands in a different way, and the control system generates emulated HID commands to put into effect the user commands

The invention will be described with reference to medical equipment, and in particular a medical scanner.

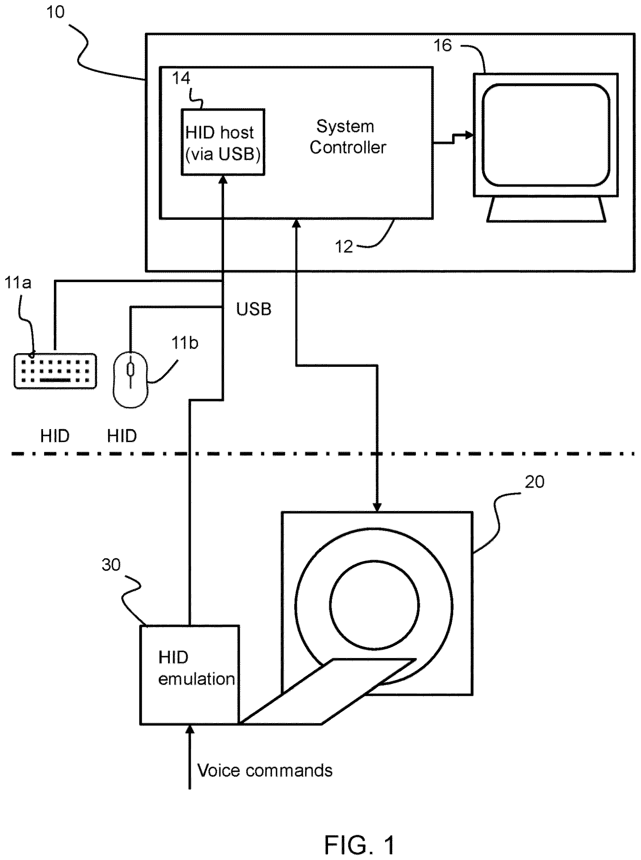

Fig. 1 shows equipment in the form of a medical system, and in particular a radiology system, having a control console 10 and a scanner 20, such as a CT scanner. It is to be understood that other systems like MRI systems, angiography systems, PET systems, or other medical or non-medical systems can be envisaged within the context of the present invention. Thus, the explanation below with reference to a medical system may be applied more generally to other types of equipment to be controlled.

The control console 10 is for example in a control room, whereas the scanner 20 is for example in the exam room. The medical system 10, 20 is capable of receiving user input control commands from one one more human interface devices, HIDs, such as the keyboard 11a and mouse 11b shown. Other examples include a trackpad or touchpad or gesture interface. The HID commands are received, via a USB port, at a HID host 14, implementing the USB HID protocol. The HID host is part of a system controller 12 of the control console 10.

The control console 10 also has a display 16. The display presents information about the scanning procedure, and it may also function as an input device, for example based on touch screen inputs to the display. Thus, touch screen input is one several input modalities defined in the HID-USB standard.

The invention relates to a control system 30 for controlling equipment generally, for example for controlling the medical system as shown. In particular, the control system 30 generates HID input signals.

The control system 30 receives user input control commands, and these are received independently of the HIDs. For example, the user input control commands are spoken. In such a case, the control system uses voice recognition to identify spoken commands and it converts these to HID input commands suitable for controlling the medical system. These HID input commands would normally be manually input by the user using keyboard 11a and mouse 11b (and other HIDs not shown), and they are specific to the particular medical system. Thus, the control system emulates manual control inputs. It means the user who is providing input to the control console 10 can be remote from the control console, for example with the patient in the exam room. More generally, the control system can receive commands from any local operator currently not working directly at the console or by a remote assistant overseeing the examination (and possibly multiple other examinations). These various options enable improved efficiency in the radiology workflow.

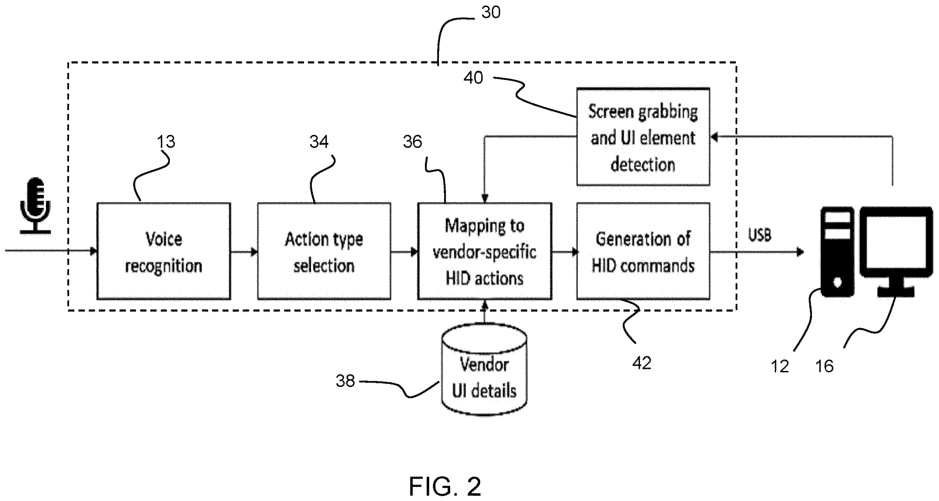

Fig. 2 shows the function of a first example of the control system 30.

The control system 30 receives sounds picked up by a microphone. The microphone may be a dedicated microphone in the exam room, or an existing intercom solution, or a headset worn by the operator. The control system may be considered to have a set of modules, explained below, implemented by software running on a processor.

Voice recognition is applied by module 13 to extract spoken commands from the captured sounds. The voice recognition identifies keywords and semantic structure.

These spoken commands are for instructing control actions to be applied to the medical system.

The control actions comprise any available user interface functions which can be used to control the operation of the medical system. Examples are:
changing patient details in a patient record;
moving a patient table and positioning the patient;
starting or stopping scan events;
performing calibration measurements;
changing lighting or fan settings.

These control actions are typically available for many different types of medical system with which the control system may be used. However, different medical systems, with different user interfaces, will require different manual user inputs in order to put into effect those control actions. These control actions are of course examples only. Any other function accessible via the user interface of the medical system could be considered.

In a practical implementation, there will be a finite list of actions supported by the control system, because for each of them a pre-defined set of UI interaction steps need to be supplied.

In module 34, the control actions are identified using a database, such that an action type can be selected which corresponds to the spoken commands from the user. Thus, the user provides spoken commands verbally to the control system, and these are converted to control actions to be applied to the medical system, in order to put into effect the spoken commands.

In module 36, the control actions are converted into the suitable HID input actions (such as specific mouse clicks and keyboard commands) which are part of the user interface of the specific medical system being used, in order to implement the control actions. Mouse positioning and clicking is for example used to select icons displayed on the display 16.

For this purpose, a database 38 is accessed (it may be remote from the control system or it may be part of the control system). The database provides a definition of the user interface functions for the particular medical system, i.e. the set of HID inputs that may be provided to the console and the corresponding control actions that are effected by these HID inputs. The user interface commands, and corresponding HID inputs are thus specific to the modality type and vendor.

The required HID commands are generated by module 42 and they are then transmitted to the USB port of the medical system controller 12, and they then connect to the HID host 14. This for example takes place over a USB cable. The HID commands thereby emulate user input to the HID.

The conversion of the spoken commands, corresponding to desired control actions, to HID input commands enables the operator to easily control an imaging system in a consistent way, independent of the specific system type and user interface. The control system is thereby vendor-agnostic and can be retrofitted to any existing imaging system installation. Instead of processing spoken commands, the control system may process gesture commands.

The control actions available at any time may depend on the information displayed on the display 16. For example, different icons are presented at different times, depending on the current status of the imaging system. For example, a viewing mode may need to be changed before a particular action can be instructed, or a modal dialog window may need to be closed before performing an action. A display icon that needs to be selected to implement a particular action may also be located at variable positions on the screen depending on the current status of the medical system.

The current status of the medical system for example depends on the progress of the medical system in performing its function, for example the progress of a medical scan. The current status for example controls the information that is displayed to the user and the control options that are available to the user at that particular time.

By way of example, the status of the medical system may be that a task is being performed to open a new patient case. In a given user interface, this may be achieved by sending keyboard command Alt-P to open the Patient tab from the main menu and then N to create a new patient case. However, if a modal window is currently open (e.g., to display a message), this window needs to be closed first before the menu is accessible. The HID commands therefore depend on the system state. In the latter case, the system would need to first send a simulated mouse click on "OK" or a keyboard command to close the modal window. Similarly, other system states may require other adapted UI interactions to achieve the same result.

In preferred examples, the control system receives the displayed output of the display screen and then determines, from the displayed output, the current status of the medical system, and thereby determines the control actions that are available and the HID commands that are needed. A screen grabbing module 40 is shown for this purpose. It can identify the UI status (e.g. which user interface icons are displayed and where they are on the screen). The generated HID input commands can thereby take into account the configuration of, and the current status of, the medical system. In some instances, the screen grabber according to the present invention could be a screen capturing software.

One straightforward way to implement a screen grabbing function would be to split the video signal of the console monitor using a video splitter device and connect the second output to a video capture device (standard USB device to convert a video input (HDMI, DVI, etc.) to a video stream via USB protocol). The image shown on the console screen can then be processed by the control system to which the USB screen grabber is connected.

The system state can then be inferred from analyzing parts of the captured screen to detect current UI state, active UI elements, overlay windows, or scan progress information.

Instead of screen grabbing software, a (hardware) captured video signal may be used or as data from screen grabbing software.

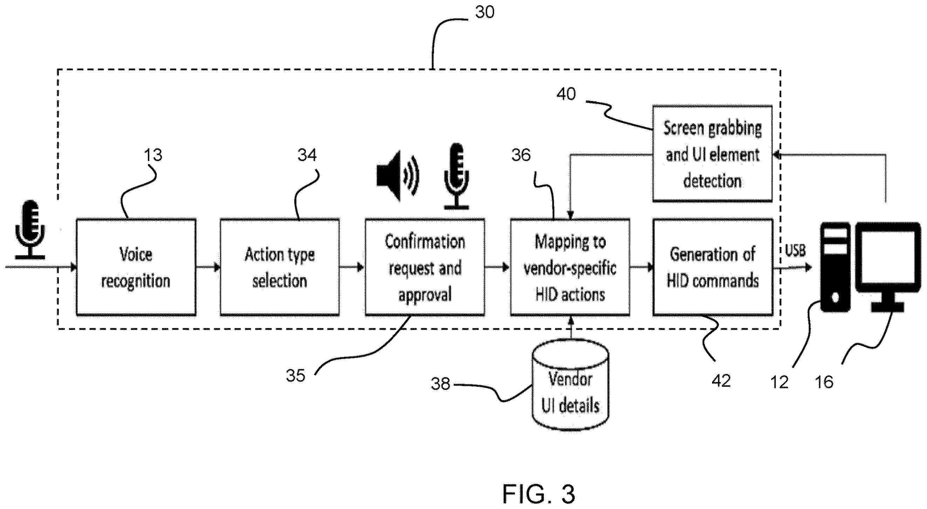

Fig. 3 shows a modification in which a confirmation module 35 is used to obtain approval for an identified control action before transmitting the corresponding HID input commands. In the example shown, the confirmation is sought before the HID commands are generated. Obtaining approval for the proposed action may for example be achieved by voice communication using a loudspeaker and microphone, or by visual/haptic communication via a display, button, or touchscreen. The approval may be requested from the same operator who initially gave the voice command or from another local or remote operator with the required expertise.

Another optional module is for implementing a masking method for audio and video data de-identification (removal of personal data). This is relevant when the information is not processed locally but in the cloud or data is stored for training.

The example above uses a microphone to capture audio so that spoken instructions are recognized. A camera may additionally or alternatively be used as an input device, e.g., for gesture control as mentioned above.

Another optional module is for activating and deactivating the audio capture (or video capture if video is used), for example to prevent acquiring confidential or personal communications. This enables the need for the analysis and recording of all information. The activation of the analysis and recording may be combined with an adjustable timer, so the system is only active for a pre-set time after activation and then turns itself off again.

A visual element, e.g., an LED, can indicate whether the system is active or not.

Another optional module is to recognize a trigger word to activate the analysis of audio (or video).

In another variant, mapping actions to device-specific USB HID commands can be used to implement a device-independent control interface for common actions, such as add new patient, interact with a picture archiving and communication system (PACS) or with a radiology information system (RIS), modify default protocols (exam cards). This is useful for automating administrative tasks on a whole set of scanners. In this case, the voice input of the operator would be replaced by input from, e.g., the hospital reception desk or the ROCC.

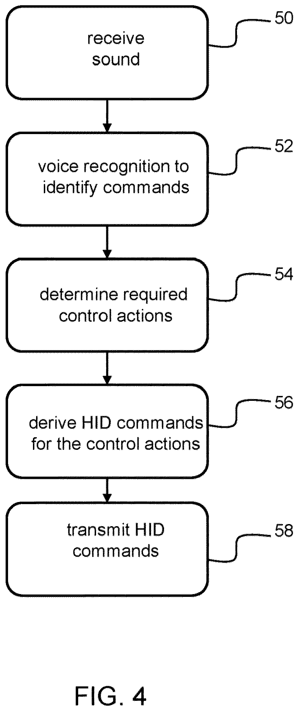

Fig. 4 shows a method of controlling equipment, the equipment capable of receiving user input control commands via an emulated human interface device, HID.

The example of the method shown is based on voice recognition for controlling a medical system.

The method comprises:
in step 50, receiving captured sounds; and
in step 52, applying voice recognition to extract spoken commands from the captured sounds.

More generally, these two steps may be different if other types of user input, e.g. gestures, are to be interpreted by the control system. More generally therefore, these steps enable user input control commands to be understood.

In step 54, the method identifies control actions to be applied to the medical system in order to put into effect the spoken commands.

The method then comprises:
in step 56, converting the control actions to HID input commands suitable for controlling the equipment; and
in step 58, transmitting the HID input commands to the equipment, e.g. via a USB port.

The example above is based on the HID-USB standard. However, the concept of the invention, which involves emulating manual user input via human interface devices, may be applied to other standard, and hence other protocols which define the communication interface between the human interface devices and the control system of the medical system.

The described disclosure may be provided as a computer program, or software that may include a computer-readable storage medium having stored thereon instructions, which may be used to program a computer system (or other electronic devices) to perform a process according to the present disclosure. A computer-readable storage medium includes any mechanism for storing information in a form (e.g., software, processing application) readable by a computer. In various implementations, the processor may be associated with one or more storage media such as volatile and non-volatile computer memory. Such as the computer-readable storage medium may include, but is not limited to, optical storage medium (e.g., CD-ROM), magneto-optical storage medium, read only memory (ROM), random access memory (RAM), erasable programmable memory (e.g., EPROM and EEPROM), flash memory, or other types of medium suitable for storing electronic instructions. RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

`Computer memory' or 'memory' is an example of a computer-readable storage medium. Computer memory is any memory which is directly accessible to a computational system. `Computer storage' or 'storage' is a further example of a computer-readable storage medium. Computer storage is any non-volatile computer-readable storage medium. In some embodiments computer storage may also be computer memory or vice versa.

Machine executable instructions or computer executable code may comprise instructions or a program which causes a processor or other computational system to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly. In other instances, the machine executable instructions or computer executable code may be in the form of programming for programmable logic gate arrays.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A control system (30) for controlling equipment, the equipment being configured to receive user input control commands from one or more human interface devices (14), wherein the control system (30) comprises a processor for receiving and processing user input control commands, wherein the processor is adapted to:
identify control actions to be applied to the equipment in order to put into effect the user input control commands;
convert the control actions to human interface device, HID, input commands compatible with said one or more human interface devices (14), suitable for controlling the equipment; and
transmit the HID input commands to the equipment to emulate user input applied to said one or more human interface devices (14).

2. The control system of claim 1, wherein the processor is adapted to extract spoken commands from the user input control commands using voice recognition or extract gestured commands from the user input control commands using gesture recognition.

3. The control system of claim 1 or 2, wherein the HID input commands comprise one or more of: mouse commands, trackpad commands, touchpad commands, keyboard commands, gesture commands.

4. The control system of claim 1 or 2, wherein the equipment comprises a display screen, wherein the processor is further adapted to receive a displayed output of the display screen and determine, from the displayed output, the current status of the equipment, and wherein the HID input commands take into account the current status of the equipment.

5. The control system of claim 4, wherein the processor is configured to receive the displayed output of the display screen as a captured video signal or as data from screen grabbing software.

6. The control system of any one of claims 1 to 5, wherein the equipment comprises a medical scanner and wherein the processor is configured to select the control actions from a pre-defined list of control actions, including one or more of:
changing patient details in a patient record;
moving a patient table and positioning the patient;
starting or stopping scan events;
performing calibration measurements;
changing lighting or fan settings.

7. The control system of any one of claims 1 to 6, comprising a database which stores user input control commands which are supported by a plurality of different types of equipment.

8. The control system of any one of claims 1 to 7, wherein the processor is further configured to obtain user feedback before transmitting the corresponding HID input commands.

9. A system, comprising:
equipment capable of receiving user input control commands from one or more human interface devices; and
the control system of any one of claims 1 to 8 for controlling the equipment.

10. A method of controlling equipment, the equipment capable of receiving user input control commands from one or more human interface devices, wherein the method comprises:
(50,52) identifying control actions to be applied to the equipment in order to put into effect the user input control commands;
(56) converting the control actions to human interface device, HID, input commands compatible with said one or more human interface devices, suitable for controlling the equipment; and
(58) transmitting the HID input commands to the equipment to emulate user input applied to said one or more human interface devices (14).

11. The method of claim 10, wherein the equipment comprises a display screen, wherein the method further comprises receiving the displayed output of the display screen and determining, from the displayed output, the current status of the equipment, and wherein the generation of the HID input commands take into account the current status of the equipment.

12. The method of claim 10 or 11, wherein the HID input commands comprise one or more of: mouse commands, trackpad commands, touchpad commands, keyboard commands, or gesture commands.

13. The method of any one of claims 10 to 12, wherein the equipment comprises a medical scanner, and the method comprises comprising selecting the control actions from a pre-defined list of control actions, including one or more of:
changing patient details in a patient record;
moving a patient table and positioning the patient;
starting or stopping scan events;
performing calibration measurements;
changing lighting or fan settings.

14. The method of any one of claims 10 to 13, comprising accessing a database to convert the control actions to HID input commands, wherein the database stores user input control commands which are supported by a plurality of different types of equipment.

15. A computer program comprising computer program code which, when said program is run on a computer, cause the computer to carry out the method of any one of the claims 10 to 14.
